# EUROPÄISCHE PATENTANMELDUNG

(11) **EP 2 431 249 A1**
(43) Veröffentlichungstag der Anmeldung: **21.03.2012**
(21) Anmeldenummer: 11171377.2
(22) Anmeldetag: 24.06.2011
(51) Int. Cl.: B61D 27/00, B60H 1/34

(54) **Luftausströmer**

(30) Priorität: 21.09.2010 DE 202010012790 U
(71) Anmelder: Dreiha GmbH, 28719 Bremen (DE)
(72) Erfinder: Schuldt, Joachim, 27299 Langwedel (DE); Franke, Klaus, 27211 Bassum (DE)
(74) Vertreter: Andres, Mark

(57) **Zusammenfassung**

Die Erfindung betrifft einen Luftausströmer (1) für ein Schienenfahrzeug, mit einem Außenkörper (5), welcher mit einer auslassseitigen Leitung eines Lüftungssystems, insbesondere eines Heiz- und/oder Kühlsystems, verbindbar ist, einem Innenkörper (3), welcher innerhalb des Außenkörpers (5) anordenbar ist und eine Öffnung zum Ausströmen von Luft aus der Leitung des Lüftungssystems aufweist, und mindestens einer Klappe (7), die zum Freigeben und Verschließen der Öffnung eingerichtet und an dem Innenkörper (3) befestigt ist.

Die Erfindung betrifft insbesondere einen Luftausströmer (1), bei dem Außenkörper (5), und/oder der Innenkörper (3) und/oder die mindestens eine Klappe (7) aus einem Material bestehen, welches einen Faserwerkstoff und einen Matrixwerkstoff umfasst.

## Beschreibung

Die vorliegende Erfindung betrifft einen Luftausströmer für ein Schienenfahrzeug. Mit einem Außenkörper, welcher mit einer auslassseitigen Leitung eines Lüftungssystems, insbesondere eines Heiz- und/oder Kühlsystems, verbindbar ist, einem Innenkörper, welcher innerhalb des Außenkörpers anordenbar ist und eine Öffnung zum Ausströmen von Luft aus der Leitung des Lüftungssystems aufweist, und mindestens einer Klappe, die zum Freigeben und Verschließen der Öffnung eingerichtet und an dem Innenkörper befestigt ist.

Luftausströmer der vorstehend genannten Art kommen abgesehen von Schienenfahrzeugen auch in Kraft- und anderen Fahrzeugen beispielsweise zur Personenbeförderung zum Einsatz. Der Außenkörper des Luftausströmers dient üblicherweise als Halterung bzw. Fassung für den Innenkörper, durch welchen die Heiz- und/oder Kühlluft oder Frischluft hindurch gefördert wird. Die bekannten Luftausströmer werden typischerweise mittels mindestens einer Klappe bedient, die den Luftstrom des Lüftungssystems freigibt oder verschließt. In bestimmten Öffnungsstellungen der mindestens einen Klappe übernimmt diese auch eine Umlenkungsfunktion, ähnlich einem Luftleitblech.

Um Zugang zu dem Leitungsbereich des Lüftungssystems von der Auslass-Seite aus zu erlangen, muss ein Luftausströmer ausgebaut werden. Beispielsweise bei Wartungsarbeiten ist dies häufig der Fall. Im Anschluss an die Wartungsarbeiten wird der Luftausströmer wieder eingesetzt. Weiterhin wird der Luftausströmer durch Bedienen, beispielsweise der mindestens einen Klappe, im bestimmungsgemäßen Betrieb einem bestimmten, zu erwartenden Verschleiß ausgesetzt. Zusätzlich ist insbesondere in Fahrzeugen, welche zur Personenbeförderung eingesetzt werden, erfahrungsgemäß ein weiterer Verschleiß in Folge fahrlässiger oder mutwilliger Sachbeschädigung vermehrt zu beobachten. Fortschreitender Verschleiß verschärft bei den bekannten Luftausströmern das Problem, dass sich die zueinander beweglichen Teile, insbesondere die Klappen der Luftausströmer, infolge von im Fahrzeugbetrieb auftretenden Vibrationen selbsttätig verstellen, und dies umso mehr, je stärker der Verschleiß voranschreitet.

Bekannte Luftausströmer werden als Massen-Artikel hergestellt und unterliegen somit hinsichtlich des einzuhaltenden Stückpreises fertigungsökonomischen Restriktionen. Im Falle einer Beschädigung eines Luftausströmers, die zu einem Funktionsversagen oder einer erheblichen Einschränkung des Funktionsverhaltens führt, ist ein Austausch des Luftausströmers notwendig. Zwar kann eine Vielzahl von Luftausströmern seitens des Wartungsbetriebs vorgehalten werden, da es sich um Massenware handelt, allerdings ist die Wartungszeit, die den Ein- und Ausbau des Luftausströmers begleitet, ein weiterer Nachteil, der im Stand der Technik als unbefriedigend empfunden wird.

Vor diesem Hintergrund lag der vorliegenden Erfindung die Aufgabe zugrunde, einen Luftausströmer anzugeben, welcher eine verbesserte Verschleißbeständigkeit aufweist.

Die Erfindung löst die ihr zugrunde liegende Aufgabe bei einem Luftausströmer der eingangs genannten Art, indem der Außenkörper und/oder der Innenkörper und/oder die mindestens eine Klappe aus einem Material M bestehen, welches einen Faserwerkstoff und einen Matrixwerkstoff umfasst. Die Erfindung macht sich hierbei die Erkenntnis zu Nutze, dass das Material, welches einen Faserverbundwerkstoff darstellt, den bislang vorhandenen Widerspruch auflöst, dass eine verbesserte mechanische Belastbarkeit des Luftausströmers lediglich zu Lasten deutlich gesteigerter Kosten zu erreichen ist. Zwar sind die Fertigungskosten eines Luftausströmers, dessen vorstehend genannte Teile aus dem Material M bestehen, welches einen Faserwerkstoff und einen Matrixwerkstoff umfasst, unter Umständen höher als die Fertigungskosten für bekannte Luftausströmer, die üblicherweise aus einem thermoplastischen Kunststoff hergestellt sind. Allerdings wird durch die erfindungsgemäße Verwendung eines faserverstärkten Werkstoffs auch eine deutliche Verlängerung der Wartungszyklen erreicht, wodurch die höheren Fertigungskosten für den einzelnen Luftausströmer kompensiert werden. Das Vorurteil, dass die Verbesserung der mechanischen Eigenschaften und die Erhöhung der Widerstandsfähigkeit gegen Vandalismus oder fahrlässige Beschädigungen einen erhöhten Kostenaufwand erfordern, wird durch die vorgeschlagene Lösung widerlegt, indem im Betrieb Einsparungen gemacht werden.

Die Erfindung wird vorteilhaft dadurch weitergebildet, dass der Matrixwerkstoff mindestens einen Duroplasten umfasst, wobei der mindestens einen Duroplast ausgewählt ist aus der Gruppe Polyesterharz, vorzugsweise ungesättigtes Polyesterharz, Vinylesterharz, Phenolharz und Epoxidharz.

Weiter vorzugsweise ist der Faserwerkstoff ausgewählt aus der Gruppe Glasfaser, Kohlefaser, und Naturfaser. Die Verwendung eines Duroplasten als Matrixwerkstoff bildet die Grundlage für eine hohe Härte des Materials M. Unter Duroplast wird im Rahmen der vorliegenden Anmeldung sowohl ein reiner Duroplast wie auch ein Duroplast mit Zusatz von Additiven verstanden. Die Additive sind bevorzugt so auszuwählen, dass sie die mechanischen Eigenschaften positiv beeinflussen. Erstrebenswert ist eine möglichst hohe Härte bei gleichzeitig möglichst geringer Dichte. Besonders bevorzugt wird als Duroplast ein ungesättigtes Polyesterharz verwendet. Die Einbettung von einem Faserwerkstoff in den vorzugsweise duroplastischen Matrixwerkstoff ermöglicht eine weitere, signifikante Steigerung der Härte des Materials M. Besonders bevorzugt wird als Faserwerkstoff Glasfaser eingebettet in ungesättigtes Polyesterharz eingesetzt. Ein wesentlicher Vorteil dieser besonders bevorzugten Kombination liegt in der hohen Härte bei geringer Dichte. Nach dem Aushärten weist dieses Material so gut wie keine wahrnehmbare Elastizität mehr auf. Die Dichte, welche im Bereich von unterhalb 2g/cm³ liegen kann, ist bei gleicher Härte des Materials nur unter wesentlich höheren Kosten realisierbar. Somit vereint ein dementsprechend ausgebildetes Material M mit ungesättigtem Polyesterharz als Matrixwerkstoff und Glasfaser als Faserwerkstoff den Vorteil einer hohen mechanischen Beständigkeit, eine geringe Dichte und damit einhergehend ein geringes Bauteilgewicht und zudem noch bezogen auf die vorgenannten mechanischen Eigenschaften sehr moderate Fertigungskosten in sich, verglichen mit anderen Werkstoffen, die dieselben oder ähnliche Werkstoffeigenschaften aufweisen. Ein Vorteil des geringen erzielbaren Gewichts liegt darin, dass ein Beitrag zur Gewichtsreduktion des Gesamtfahrzeugs geleistet wird. Insbesondere bei Schienenfahrzeugen, aber auch bei Kraftfahrzeugen spielt dies im Hinblick auf zulässige Brücken- und Fahrbahnlasten eine zunehmende Rolle. Darüber hinaus wird ein Beitrag zur Kraftstoff- bzw. Energieersparnis geleistet.

Gemäß einer weiteren bevorzugten Ausführungsform sind die Fasern des Faserwerkstoffes als Kurzfasern ausgebildet. Hiermit lässt sich folglich ein mit Kurzfasern verstärktes Material M verwirklichen. Besonders bevorzugt ist in dem Zusammenhang die Kombination von ungesättigtem Polyesterharz als Matrixwerkstoff mit als Kurzfasern ausgebildeten Glasfasern als Faserwerkstoff. Ein wesentlicher Vorteil in der Ausbildung der Fasern als Kurzfasern ist darin zu sehen, dass das Material in signifikant höherem Maße formbar ist. Ein gemäß dieser besonders bevorzugten Ausführungsform ausgebildetes Material M ermöglicht die Herstellung von Formteilen im Spritzgussverfahren. Zwar sind an die für ein Spritzgussverfahren notwendigen Werkzeuge mitunter erhöhte Anforderungen bezüglich der Dichtheit gestellt, da das ungesättigte Polyesterharz mit Kurz-Glasfaser als verhältnismäßig dünnflüssige Masse in das Werkzeug einzufüllen ist, jedoch amortisieren sich die Werkzeugkosten mit steigender Stückzahl.

Andere Materialien, die ähnliche Festigkeitswerte aufweisen wie die vorstehend erläuterte besonders bevorzugte Ausführungsform des Materials M erfordern noch deutlich höheren finanziellen Aufwand. Ein weiterer wesentlicher Vorteil des in vorstehender Weise ausgebildeten Luftausströmers aus dem besonders bevorzugten Material M liegt in der hohen Temperaturbeständigkeit. In besonders vorteilhafter Weise ergibt sich durch die Kombination des Duroplasten mit der Glasfaserverstärkung und ggf. weiteren Additiven eine besonders hohe Temperaturbeständigkeit. Im Hinblick auf die zugrundeliegende Aufgabe ist dies besonders deswegen von Vorteil, weil ein Funktionsversagen des Luftausströmers in Folge einer von außen herbeigeführten Entzündung in Folge eines Defekts des Lüftungssystems oder in Folge von Vandalismus ein ernst zunehmendes Problem darstellt. Vor diesem Hintergrund wird die gesteigerte Temperaturbeständigkeit, welche sich auch in einer hohen Brandfestigkeit ausdrückt, als besonderer Vorteil der Erfindung angesehen.

Der Außenkörper des Luftausströmers ist vorzugsweise zumindest teilweise in eine Ausnehmung in einem Bewandungsabschnitt versenkbar und weist stirnseitig einen flanschartigen Vorsprung auf, welchem mit einer Fläche des Bewandungsabschnitts in Anlage bringbar und mittels Schraubverbindungen dort befestigbar ist. Vorzugsweise sind die Schraubverbindungen in montiertem Zustand von dem Innenkörper verdeckt. Der Innenkörper weist hierbei vorzugsweise stirnseitig einen flanschartigen Vorsprung auf, welcher in montiertem Zustand in Kontakt mit dem flanschartigen Vorsprung des Außenkörpers steht. Aus dieser Anordnung ergibt sich einerseits der Vorteil, dass etwaige Schraubverbindungen in dem Außenkörper in Folge der Verdeckung durch den Innenkörper von außen nicht sichtbar sind. Es wird hierdurch kein Anreiz vermittelt, die Schrauben zu lösen oder zu manipulieren. Weiterhin werden die Schlüssel-Eingriffe der Schrauben vor Beschädigungen oder Verschmutzung geschützt. Ein Vorteil des Kontakts zwischen Innen- und Außenkörper an den jeweiligen flanschartigen Vorsprüngen ergibt sich daraus, dass infolge des Kontakts zwischen dem Innenkörper und dem Außenkörper Reibung auftritt. Je nachdem, wie stark die Anpresskraft zwischen dem Innenkörper und dem Außenkörper im Bereich der flanschartigen Vorsprünge ausgebildet ist, ergibt sich ein höherer oder geringer Widerstand gegen Relativbewegungen in Folge der Reibkraft.

Gemäß einer weiteren bevorzugten Ausführungsform des erfindungsgemäßen Luftausströmers ist der Innenkörper in Richtung einer Achse X in den Außenkörper einführbar, wobei zwischen dem Innenkörper und dem Außenkörper ein elastisch verformbares erstes Klemmelement angeordnet ist, welches dazu eingerichtet ist, in montiertem Zustand eine erste Widerstandskraft gegen ein Bewegen des Innenkörpers relativ zu dem Außenkörper in Richtung der Achse X aufzubringen. Vorzugsweise erstreckt sich das erste Klemmelement jeweils teilweise innerhalb einer Ausnehmung in den Innenkörper und dem Außenkörper, oder steht in montiertem Zustand in Hintergriff mit einer Körperkante des Innenkörpers und/oder des Außenkörpers, sodass ein Entfernen des Innenkörpers in Richtung der Achse X von dem Außenkörper nur mittels Aufbringen einer Kraft möglich ist, welche größer als die erste Widerstandskraft ist. Die erste Widerstandskraft ist somit eine Rückhaltekraft, die infolge der elastischen Verformung des ersten Klemmelements der Bewegung des Innenkörpers in Richtung der Achse X entgegenwirkt. Das erste Klemmelement selbst ist vorzugsweise in demontiertem Zustand von Innenkörper und Außenkörper entweder dem Innenkörper oder dem Außenkörper zugeordnet und von diesem entfernbar ausgebildet. Das erste Klemmelement ist vorzugsweise somit ein Wechselteil, welches nach Verschleiß ersetzt werden kann. Es ergibt sich hierdurch ein besonderer Vorteil im Zusammenspiel mit dem erfindungsgemäßen Material. Dadurch, dass vorzugsweise der Innenkörper und/oder Außenkörper des Luftausströmers gemäß bevorzugter Ausführungsform keine wahrnehmbare Elastizität aufweisen, werden diese auch nicht infolge irgendwelcher elastischen Beanspruchungen verformt und verschleißbeansprucht. Ein Verformung und damit einhergehender Verschleiß treten ausschließlich in dem ersten Klemmelement auf, welches als kostengünstiges Einzelteil ersetzbar ist.

Ein weiterer Vorteil der erfindungsgemäßen Ausbildung des Luftausströmers mit ersten und/oder zweiten Klemmelementen ist die Eindämmung des Problems des selbsttätigen Verstellens infolge von Vibrationen. Kommt es durch einen Verschleiß des Klemmelements selbst doch irgendwann hierzu, ist es ausreichend, lediglich das Klemmelement auszutauschen.

Gemäß einer weiteren bevorzugten Ausführungsform des erfindungsgemäßen Luftausströmers ist der Innenkörper relativ zu dem Außenkörper um die Achse X drehbar gelagert, und das erste Klemmelement ist dazu eingerichtet, in montiertem Zustand eine zweite Widerstandskraft gegen eine Drehung des Innenkörpers relativ zu dem Außenkörper um die Achse X auszuüben. Der Innenkörper ist vorzugsweise stufenlos relativ zu dem Außenkörper drehbar. Dies ist von Vorteil, da bei teilweise geöffneter Position der mindestens einen Klappe eine selektive Ausrichtung des ausströmenden Fluidstroms stufenlos um 360° ermöglicht ist. Die Größe der zweiten Widerstandskraft gegen eine Drehung des Innenkörpers relativ zu dem Außenkörper ist maßgeblich davon abhängig, wie groß die zwischen dem Innenkörper und Außenkörper auftretende Reibung bei Drehung ausgebildet ist. Reibung entsteht entweder bei direktem Kontakt des Innenkörpers mit dem Außenkörper oder - ggf. zusätzlich - infolge eines Kontakts des Innenkörpers mit dem ersten Klemmelement einerseits und des Außenkörpers mit dem ersten Klemmelement andererseits. Je stärker der Innenkörper und der Außenkörper auf das erste Klemmelement drücken, desto größer ist die auftretende Reibung und damit einhergehend die Widerstandskraft gegen eine Drehung des Innenkörpers relativ zu dem Außenkörper. Die Größe der Widerstandskraft ist abgesehen von der in Richtung der Achse X wirkenden Anpresskraft durch eine Ausgestaltung des ersten Klemmelements beeinflussbar. Das erste Klemmelement ist vorzugsweise als O-Ring ausgebildet. Mittels einer Änderung der Materialstärke des O-Rings und/oder der Shore-Härte lässt sich vorgeben, wie hoch die aufzubringende Widerstandskraft ist. Hierdurch ist je nach Anwendungsgebiet für den Luftausströmer ein optimales Ansprechverhalten für die Bedienung gewährleistet. Eine Drehung des Innenkörpers relativ zu dem Außenkörper ist insbesondere dann von praktischer Bedeutung, wenn die mindestens eine Klappe des Luftausströmers in teilweise geöffneter Position nach Art eines Luftleitbleches zum Umlenken des austretenden Lüftungsstroms eingesetzt wird.

Vorzugsweise ist der erfindungsgemäße Luftausströmer dadurch weitergebildet, dass ein oder mehrere elastisch verformbare zweite Klemmelemente an einer äußeren Umfangsfläche des Außenkörpers angebracht sind, welche dazu eingerichtet sind, in montiertem Zustand den Außenkörper mittels einer kraftschlüssigen Verbindung innerhalb der Ausnehmung zu befestigen. Wie auch in dem vorstehenden Ausführungsbeispiel unter Bezugnahme auf das erste Klemmelement erläutert, ist das zweite Klemmelement dazu eingerichtet, eine Widerstandskraft aufzubringen, die entgegen einer Bewegungsrichtung aufgebracht wird, in welche der Luftausströmer aus dem Bewandungsabschnitt - mithin seiner Einbauposition - entfernt werden soll. Auch diesbezüglich wird als vorteilhaft angesehen, dass ausschließlich das zweite Klemmelement elastischen Verformungen unterworfen ist, während der Außenkörper im Wesentlichen unverformt bleibt. Auch in diesem Fall tritt Verschleiß nur an dem zweiten Klemmelement auf, und nicht an dem Außenkörper. Infolge voranschreitenden Verschleißes muss somit nur das zweite Klemmelement ersetzt werden. In Ergänzung oder alternativ zu einem Kraftschluss innerhalb der Ausnehmung des Bewandungsabschnittes, in welchem der Luftausströmer angeordnet ist, kann das zweite Klemmelement vorteilhaft auch mit einer korrespondieren ausgebildeten Aussparung innerhalb der Ausnehmung in Eingriff stehen. Das eine bzw. die mehreren zweiten Klemmelemente sind vorzugsweise als Stahlfeder ausgebildet.

Gemäß einer besonders bevorzugten Ausführungsform sind das erste Klemmelement und das mindestens eine zweite Klemmelement einstückig als Stahlfeder ausgebildet, und die Stahlfeder erstreckt sich in montiertem Zustand von der äußeren Umfangsfläche des Außenkörpers zu einer inneren Umfangsfläche des Außenkörpers hin. Auf diese Weise werden sowohl das erste Klemmelement als auch das zweite Klemmelement als ein Bauteil ausgebildet. Das als Stahlfeder ausgebildete Bauteil erstreckt sich im Wesentlichen klammerartig von der äußeren Umfangsfläche zu der inneren Umfangsfläche hin. In einem äußeren Bereich ist das erste Klemmelement federartig ausgebildet, und in einem inneren Bereich ist das zweite Klemmelement ausgebildet. Beide Klemmelemente, das erste und das zweite Klemmelement sind vorzugsweise als elastisch verformbare, federnde Bereiche eines mehrfach umgebogenen Stahlblechs ausgebildet.

Gemäß einer weiteren bevorzugten Ausführungsform des erfindungsgemäßen Luftausströmers, welcher mehrere, in Strömungsrichtung im Wesentlichen nebeneinander angeordnete Klappen aufweist, die jeweils zum Freigeben und Verschließen eines Teils der Öffnung zum Ausströmen von Luft aus der Leitung des Lüftungssystems eingerichtet sind, sind die Klappen mittels eines Koppelglieds miteinander verbunden und parallel zueinander vorzugsweise stufenlos zwischen einer Verschlussposition und einer Freigabeposition hin und her schwenkbar in dem Innenkörper gelagert, wobei das Koppelglied aus dem Material M besteht. Hinsichtlich der Vorteile der Materialwahl wird auf die vorstehenden Erläuterungen in Zusammenhang mit den Bauteilen Außenkörper, Innenkörper und Klappe verwiesen. Dadurch, dass auch das Koppelglied in erfindungsgemäßer Weise aus hoch verschleißbeständigem Material ausgebildet ist, wird die Zuverlässigkeit hinsichtlich des Schließ- und Öffnungsverhaltens der vorzugsweise mehreren, segmentartig ausgebildeten Klappen dieser Ausführungsform verbessert.

Gemäß einer weiteren vorteilhaften Ausführungsform des Luftausströmers ist die mindestens eine Klappe mittels Achszapfen drehbar in dem Innenkörper gelagert, in dem die Achszapfen zwischen einem in dem Innenkörper ausgebildeten Vorsprung einerseits und einem als Flachkörper ausgebildeten Gegenlager andererseits gelagert sind. Die Achszapfen, welche erfindungsgemäß als Teil der Klappe ebenfalls aus dem Material M ausgebildet sind, sind vorzugsweise sandwichartig zwischen den Vorsprung des Innenkörpers und dem als Flachkörper ausgebildeten Gegenlager angeordnet. Folglich können die Achszapfen hinsichtlich Ihrer Stabilität und Steifigkeit auch länger und größer dimensioniert werden als Achszapfen bei Klappen, die aus einem weicheren Material, beispielsweise Thermoplast, hergestellt sind und elastischen Verformungen ausgesetzt werden können.

Die äußere Umfangsfläche ist in einer alternativen Ausführungsform vorzugsweise rotationssymmetrisch, besonders bervorzugt zylindrisch ausgebildet und dazu eingerichtet, mit einem Ende eines Lüftungsschlauchs mit normierter Nennweite fluiddicht verbunden zu werden, beispielsweise mit einer Nennweite DN100.

Nachfolgend wird die Erfindung anhand einer bevorzugten Ausführungsform und unter Bezugnahme auf die beigefügten Figuren näher beschrieben. Hierbei zeigt
- Figur 1: eine räumliche Darstellung der bevorzugten Ausführungsform des Luftausströmers gemäß der vorliegenden Erfindung;
- Figur 2: eine Vorderansicht des Luftausströmers aus Figur 1;
- Figur 3: eine Querschnittsansicht des erfindungsgemäßen Luftausströmers gemäß Figuren 1 und 2;
- Figur 4: eine Detailansicht zu Figur 3;
- Figur 5: eine Seitenansicht des Luftausströmers aus den Figuren 1 bis 4; und
- Figur 6: eine Hinteransicht des Luftausströmers aus den Figuren 1 bis 5.

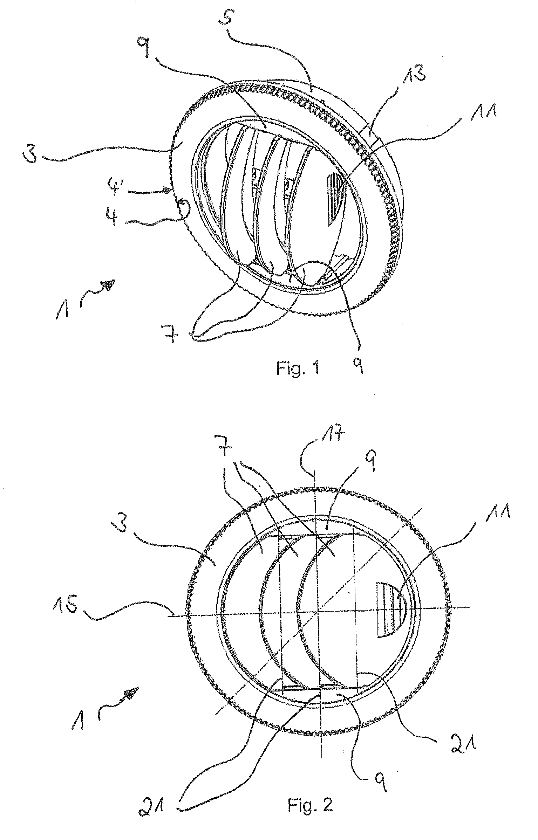

In Figur 1 ist ein Luftausströmer 1 gemäß der vorliegenden Erfindung dargestellt. Der Luftausströmer 1 weist einen Innenkörper 3 auf, welcher im Wesentlichen rotationssymmetrisch ausgebildet ist und drehbar innerhalb eines Außenkörpers 5 angeordnet ist. Der Innenkörper 3 weist stirnseitig einen flanschartigen Vorsprung 4 auf. Der flanschartige Vorsprung 4 weist in einem Randbereich eine Verzahnung 4' auf. Die Verzahnung 4' ist dazu ausgebildet, eine Drehbewegung des Innenkörpers 3 relativ zu dem Außenkörper 5 zu erleichtern, indem die Griffigkeit erhöht ist. Innerhalb des Innenkörpers 3 sind drei Klappen 7 angeordnet. Die drei Klappen 7 sind drehbar innerhalb des Innenkörpers 3 gelagert. Die Klappen 7 sind hierbei mit einem Zapfen auf jeder Seite zwischen einem Vorsprung in dem Innenkörper 3 und einem Gegenlager 9 gelagert. Eine der Klappen 7 weist einen konturierten Abschnitt 11 auf, welcher ein Verschwenken der Klappen 7 in paralleler Art und Weise erleichtert, indem mittels einer Aufrauhung die Griffigkeit erhöht ist.

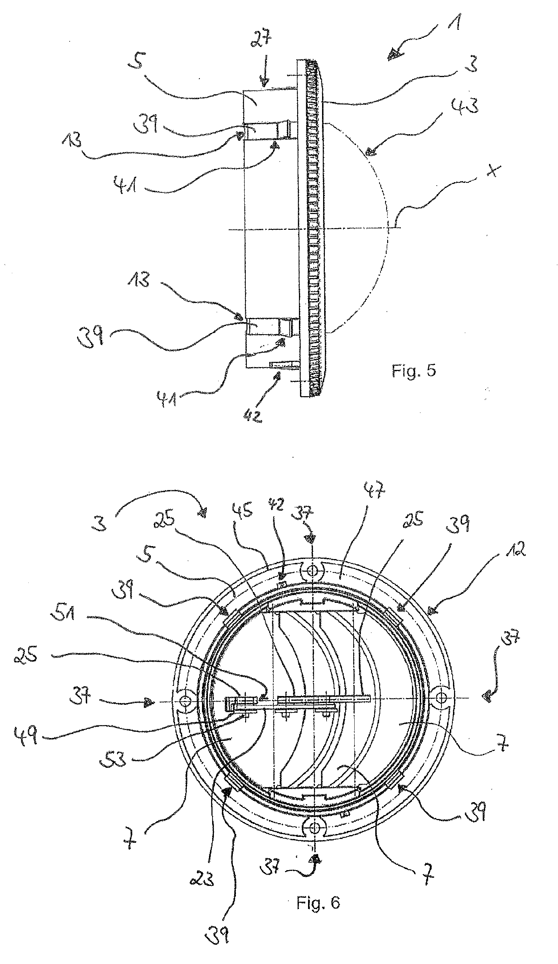

Der Innenkörper 3 und der Außenkörper 5 sind im Wesentlichen ringförmig ausgebildet. Der Außenkörper 5 weist eine Umfangsfläche auf, an welcher mehrere Ausnehmungen 13 vorgesehen sind. Die Ausnehmungen 13 (eine davon in Figur 1 dargestellt) sind zur Aufnahme von Klemmelementen eingerichtet (siehe hierzu beispielsweise Figur 5).

In Figur 2 ist der Luftausströmer 1 aus Figur 1 in einer Vorderansicht dargestellt. Es ist hierbei der Blick von vorne auf die Stirnseite des Innenkörpers 3 freigegeben. Die drei Klappen 7 des Luftausströmers 1 sind gemäß Figur 2 in Verschlussposition dargestellt. Die Klappen 7 sind um die Achsen 21 jeweils drehbar gelagert. Die Klappen 7 sind dazu ausgebildet, eine Drehung um die Achsen 21 zu vollführen, wenn im Bereich des konturierten Abschnitts 11 ein Druck ausgeübt wird. Die beiderseits der Klappen angeordneten Gegenlager 9 verhindern hierbei ein Lösen oder Herausfallen der Klappen 7.

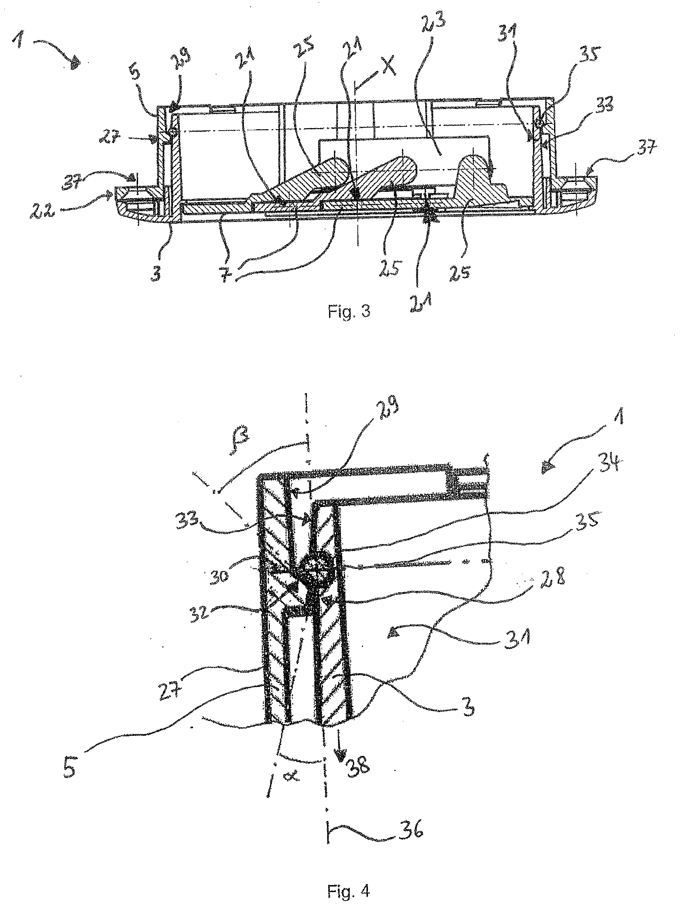

In Figur 3 ist eine Querschnittsansicht durch den erfindungsgemäßen Luftausströmer 1 entlang der Achse 15 aus Figur 2 dargestellt. Es ist zu erkennen, dass zusätzlich zu dem Innenkörper 3 auch der Außenkörper 5 stirnseitig einen flanschartigen Vorsprung 22 aufweist. Der flanschartige Vorsprung 22 wird von dem flanschartigen Vorsprung 24 des Innenkörpers 3 verdeckt. Die flanschartigen Vorsprünge 4, 22 des Innenkörpers 3 und des Außenkörpers 5 schließen bündig miteinander ab.

An den Klappen 7 ist jeweils ein stegartiger Vorsprung 25 ausgebildet, welcher sich jeweils von der Klappenebene in Richtung des Inneren des Innenkörpers 3 erstreckt. Die drei Klappen 7 sind mittels eines Koppelglieds 23 derart miteinander verbunden, dass sie zum Ausführen einer parallelen Schwenkbewegung eingerichtet sind, wenn das Koppelglied 23 bewegt wird. In Figur 3 ist eine Achse X dargestellt, welche einerseits im Wesentlichen der Symmetrieachse des Innenkörpers 3 und des Außenkörpers 5 entspricht und andererseits die Richtung anzeigt, in welche der Innenkörper 3 relativ zu dem Außenkörper 5 bewegt wird, um den Innenkörper 3 in bzw. außer Eingriff mit dem Außenkörper 5 zu bringen.

Der Außenkörper 5 weist eine äußere Umfangsfläche 27 und eine innere Umfangsfläche 29 auf. Gemäß einer bevorzugten Ausführungsform ist die äußere Umfangsfläche 27 geringfügig konisch verjüngt ausgebildet, um ein Einführen des Außenkörpers 5 in eine Ausnehmung einer Berandung zu erleichtern.

Der Innenkörper 3, welcher innerhalb des Außenkörpers 5 angeordnet ist, weist eine äußere Umfangsfläche 33 und eine innere Umfangsfläche 31 auf. Von dem Lüftungssystem gefördertes Fluid, bspw. geförderte Luft, strömt innerhalb der inneren Umfangsfläche 31 in Richtung der Klappen 7 und wird an diesen vorbei nach außen abgegeben, sofern die Klappen 7 nicht in Verschlussstellung ausgerichtet sind, wie in Figur 3 dargestellt ist. Zwischen der äußeren Umfangsfläche 33 des Innenkörpers 3 und der inneren Umfangsfläche 29 des Außenkörpers 5 ist ein erstes Klemmelement 35 angeordnet, welches als O-Ring ausgebildet ist. Das erste Klemmelement 35 ist dazu ausgebildet, mittels einer elastischen Verformung eine Widerstandskraft aufzubringen, wenn der Innenkörper 3 in Richtung der Achse X relativ zu dem Außenkörper 5 bewegt wird. Weiterhin ist das erste Klemmelement 35 dazu ausgebildet, eine zweite Widerstandskraft in Folge von Reibung aufzubringen, wenn der Innenkörper 3 relativ zu dem Außenkörper 5 um die Achse X gedreht wird.

Der Außenkörper 5 weist in dem flanschartigen Vorsprung 22 ausgebildete Ausnehmungen 37 auf, die zur Aufnahme von Kopfschrauben eingerichtet sind. Vorzugsweise ist der Außenkörper 5 mittels dieser Schraubverbindungen mit einem Bewandungsabschnitt verbindbar, um den Auslass des Lüftungssystems zu bilden. Die Ausnehmungen 37 sind von dem flanschartigen Vorsprung 4 verdeckt.

Figur 4 zeigt in einer Detailansicht das erste Klemmelement 35 und dessen Anordnung zwischen dem Innenkörper 3 und dem Außenkörper 5. In Figur 4 ist ein Detail der Querschnittsansicht aus Figur 3 in einem Ausbruch dargestellt. Gezeigt ist jeweils ein Teil des ringförmigen Abschnitts des Innenkörpers 3 und des Außenkörpers 5. Der Innenkörper 3 weist eine Ausnehmung 34 auf, welche sich von der äußeren Umfangsfläche 33 des Innenkörpers 3 in Richtung der inneren Umfangsfläche 31 des Innenkörpers 3 erstreckt und ringförmig ausgebildet ist. Innerhalb der Ausnehmung 34 in den Innenkörper 3 ist ein als O-Ring ausgebildetes erstes Klemmelement 35 angeordnet.

Der Außenkörper 5 weist einen Vorsprung 32 auf. Der Vorsprung 32 erstreckt sich von der inneren Umfangsfläche 29 des Außenkörpers 5 in im Wesentlichen radialer Richtung nach innen und ist ringförmig ausgebildet. Der Vorsprung 32 befindet sich in Anlage mit dem ersten Klemmelement 35. In der gezeigten Position ist das erste Klemmelement 35 elastisch durch den Vorsprung 32 verformt, wodurch eine Vorspannkraft ausgebildet ist. Die Vorspannkraft ist gleichzeitig eine Widerstandskraft gegen ein Bewegen des Innenkörpers 3 relativ zu dem Außenkörper 5 in Richtung des Pfeils 38.

Der Vorsprung 32 weist zwei Schulter-Abschnitte auf. Ein erster Schulter-Abschnitt 28 erstreckt sich auf der Seite des Vorsprungs 32, welche in Richtung des (nicht dargestellten) flanschartigen Vorsprungs weist. In dem ersten Schulter-Abschnitt 28 ist eine Fase ausgebildet, welche einen Winkel α relativ zu einer parallelen Achse 36 der Achse X verläuft. Ein zweiter Schulter-Abschnitt 30 erstreckt sich auf der gegenüberliegenden Seite in einer Richtung, die von dem flanschartigen Vorsprung (nicht dargestellt) weg weist. Der zweite Schulter-Abschnitt 30 weist eine Fase auf, die relativ zu der Achse 36 einen Winkel β einnimmt. Der Winkel α ist vorzugsweise kleiner gewählt als der Winkel β. Auf diese Weise ist ein Einführen des Innenkörpers 3 in den Außenkörper erleichtert im Vergleich zum Abziehen des Innenkörpers 3 aus dem Außenkörper 5. Pro inkrementeller Längenänderung muss beim Bewegen des Innenkörpers 3 in Richtung des Pfeils 38 relativ zu dem Außenkörper 5 eine stärkere elastische Verformung des ersten Klemmelements 35 aufgebracht werden als beim Einführen entgegen des Pfeils 38. Vorzugsweise befindet sich in eingebauter Position das erste Klemmelement 35 in Anlage mit dem zweiten Schulter-Abschnitt 30.

Figur 5 zeigt eine Seitenansicht des erfindungsgemäßen Luftausströmers 1, parallel zu einer Achse 17 aus Figur 2. Der Innenkörper 3 ist stirnseitig etwas nach außen gewölbt und ergonomisch optimiert. Mittels einer gestrichelten Linie 43 ist angedeutet, dass sich die Klappen 7 in geöffnetem Zustand auslassseitig außerhalb des Innenkörpers 3 in Richtung der Achse X erstrecken. Der Innenkörper 3 liegt bündig an dem Außenkörper 5 an. An der äußeren Umfangsfläche 27 des Außenkörpers 5 sind in den mehreren Ausnehmungen 13 jeweils zweite Klemmelemente 39 aufgenommen. Die zweiten Klemmelemente 39 sind jeweils als Stahlfeder ausgebildet. Sie bestehen vorliegend aus einem mehrfach umgebogenen Blech, welches einen federnden Abschnitt 41 aufweist, der sich an der äußeren Umfangsfläche 27 des Außenkörpers 5 aus der Ausnehmung 13 heraus erstreckt. Optional erstreckt sich das zweite Klemmelement 39 um den ringförmigen Umfang des Außenkörpers 5 herum und an der (nicht dargestellten) inneren Umfangsfläche 29 des Außenkörpers 5 entlang. Ein optional an der inneren Umfangsfläche 29 angeordnetes erstes Klemmelement kann analog zu dem federnden Abschnitt 41 ausgebildet sein und einstückig mit dem zweiten Klemmelement 39 ausgebildet sein.

An der äußeren Umfangsfläche 27 des Außenkörpers 5 sind in einem Abstand von im Wesentlichen 180° zwei Vorsprünge 42 ausgebildet. Die Vorsprünge 42 sind zum Eingreifen in korrespondierend ausgebildete Ausnehmungen ausgebildet, wobei die Ausnehmungen innerhalb der den Luftausströmer aufnehmenden Bewandung angeordnet sind und zur Sicherung des Luftausströmers gegen Verdrehen in eingebautem Zustand eingerichtet sind. Eine solche Verdrehsicherung ist vorteilhaft, wenn ausschließlich die zweiten Klemmelemente 39 zur Befestigung des Luftausströmers zum Einsatz kommen sollen.

Figur 6 zeigt eine rückseitige Draufsicht auf den erfindungsgemäßen Luftausströmer 1 aus Figur 2. Der Blick ist freigegeben auf die in betriebsgemäßer Montage nicht sichtbare Innenseite des Außenkörpers 5. Entlang des flanschartigen Vorsprungs 22 des Außenkörpers 5 sind gleichmäßig insgesamt vier Ausnehmungen 37 angeordnet. Die vier Ausnehmungen 37 sind in einem Winkel von jeweils 90° zueinander beabstandet und zur Aufnahme von Schrauben ausgebildet. Die Ausnehmungen entsprechen hierbei vorzugsweise der Darstellung aus Figur 3 und sind rückseitig durch den Innenkörper 3 verdeckt, wenn dieser in dem Außenkörper 5 montiert ist. Relativ zu den Ausnehmungen 37 sind gemäß Darstellung aus Figur 6 vier zweite Klemmelemente 39 entlang des Umfangs der äußeren Umfangsfläche 27 (Figur 3) des Außenkörpers 5 verteilt. Die vorliegende Ausgestaltung ermöglicht es auf vorteilhafte Weise, den Luftausströmer 1 in einer Ausnehmung einer Bewandung sowohl mittels der zweiten Klemmelemente 39 zu befestigen, als auch mittels Schraubverbindungen, die in den Ausnehmungen 37 des Außenkörpers 5 aufgenommen sind. Diese beiden Befestigungsmöglichkeiten können zusammen oder alternativ zueinander benutzt werden, sodass der erfindungsgemäße Luftausströmer 1 eine gesteigerte Flexibilität hinsichtlich seiner Einbaumöglichkeiten bietet. Mehrere Einsatzfälle werden mit dem bevorzugten Luftausströmer 1 simultan abgedeckt, was in der Fertigung aufgrund der Vereinheitlichung der Bauteile einen Kostenvorteil mit sich bringt.

An den flanschartigen Vorsprung 22 des Außenkörpers 5 ist ein Bord 45 ausgebildet. Das Bord 45 verläuft ringförmig an der Außenseite des flanschartigen Vorsprungs 22 und ist zum bündigen Abschluss des Außenkörpers 5 mit der ihn aufnehmenden Bewandung ausgebildet. Hierdurch wird das Abhebeln des Außenkörpers 5 aus seiner betriebsgemäßen Montageposition durch Unbefugte erschwert.

In Figur 6 ist weiterhin dargestellt, wie die Klappen 7 jeweils mit dem Koppelglied 23 verbunden sind. An jedem der stegartigen Vorsprünge 25 sind Zapfen 53 ausgebildet, welche sich parallel zueinander und parallel zu den Achsen 21 und der Klappen erstrecken. Das Koppelglied 23 weist korrespondierend ausgebildete Ausnehmungen auf, durch welche sich die Zapfen 53 vollständig hindurch erstrecken. Auf der den stegartigen Vorsprüngen 25 zugewandten Seite ist jeweils um die Zapfen 53 herum ein O-Ring 51, welcher ein drittes Klemmelement ist, angeordnet. Das dritte Klemmelement ist wie auch die ersten und zweiten Klemmelemente dazu eingerichtet, ein selbsttätiges Verstellen der Elemente beiderseits des Klemmelements infolge von Vibrationen zu verhindern.

Auf der relativ hierzu gegenüberliegenden Seite des Koppelglieds 23 ist jeweils ein Sicherungselement 49 angeordnet. Das Sicherungselement 49 ist vorzugsweise als Stahlring ausgebildet, besonders bevorzugt als Sicherungsring, beispielsweise als Starlock^{®} - Schnellbefestiger, und mittels Verspannung auf den Zapfen 53 aufgebracht. Bei der Montage wird bevorzugt eine elastische Verformung des O-Rings 51 herbeigeführt, sodass der O-Ring 51 in Folge verstärkter Reibung eine Widerstandskraft gegen Verdrehen des Koppelglieds 23 relativ zu den stegartigen Vorsprüngen 25 aufbringt. Die Größe der Widerstandskraft ist abhängig von der Stärke der elastischen Verformung und somit Vorspannung des O-Rings 51. Alternativ zu dem O-Ring 51 können auch andere Klemmelemente, wie beispielsweise Tellerfedern eingesetzt werden. Besondere Vorteile der Ausbildung als O-Ring sind dessen geringe Stückkosten sowie die Variationsmöglichkeiten hinsichtlich der aufgebrachten Reibung, abhängig von dem Durchmesser und der Shore-Härte des O-Rings 51.

Ebenfalls in Figur 6 zu sehen sind die Vorsprünge 42 zur Sicherung des Außenkörpers 5 bzw. des Luftausströmers 1 gegen ein Verdrehen in dem ihn aufnehmenden Abschnitt einer Bewandung.

Das Koppelglied 23 und/oder die stegartigen Vorsprünge 25 weisen ihren jeweiligen, dem O-Ring 51 bzw. dritten Klemmelement zugewandten Seiten jeweils eine vorzugsweise ringförmige Ausnehmung auf, die mit der Kontur des O-Rings 51 bzw. des dritten Klemmelements korrespondiert. Die O-Ringe 51 sind jeweils folglich teilweise in dem Koppelglied und/oder dem jeweils zugeordneten stegartigen Vorsprung 25 aufgenommen. Hierdurch ist die Kontaktoberfläche zwischen dem O-Ring und den benachbarten Teilen vergrößert, das eine optimierte, vergrößerte Reiboberfläche und Widerstandskraft im Verhältnis zu den Maßen des O-Rings zur Folge hat.

## Patentansprüche

1. Luftausströmer (1) für ein Schienenfahrzeug, mit
einem Außenkörper (5), welcher mit einer auslassseitigen Leitung eines Lüftungssystems, insbesondere eines Heiz- und/oder Kühlsystems, verbindbar ist, einem Innenkörper (3), welcher innerhalb des Außenkörpers (5) anordenbar ist und eine Öffnung zum Ausströmen von Luft aus der Leitung des Lüftungssystems aufweist, und mindestens einer Klappe, die zum Freigeben und Verschließen der Öffnung eingerichtet und an dem Innenkörper (3) befestigt ist,
**dadurch gekennzeichnet, dass** der Außenkörper (5), und/oder der Innenkörper (3) und/oder die mindestens eine Klappe (7) aus einem Material M bestehen, welches einen Faserwerkstoff und einen Matrixwerkstoff umfasst.

2. Luftausströmer (1) nach Anspruch 1,
**dadurch gekennzeichnet, dass** der Matrixwerkstoff mindestens einen Duroplasten umfasst, wobei der mindestens eine Duroplast ausgewählt ist aus der Gruppe
- Polyesterharz, vorzugsweise ungesättigtes Polyesterharz,
- Vinylesterharz,
- Phenolharz,
- Epoxidharz.

3. Luftausströmer (1) nach Anspruch 1 oder 2,
**dadurch gekennzeichnet, dass** der Faserwerkstoff ausgewählt ist aus der Gruppe
- Glasfaser,
- Kohlefaser,
- Naturfaser.

4. Luftausströmer (1) nach einem der vorstehenden Ansprüche,
**dadurch gekennzeichnet, dass** die Fasern des Faserwerkstoffes als Kurzfasern ausgebildet sind.

5. Luftausströmer (1) nach einem der vorstehenden Ansprüche,
**dadurch gekennzeichnet, dass** der Außenkörper (5) zumindest teilweise in eine Ausnehmung (13) in einem Bewandungsabschnitt versenkbar ist und stirnseitig einen flanschartigen Vorsprung (24) aufweist, welcher mit einer Fläche des Bewandungsabschnitts in Anlage bringbar und mittels Schraubverbindungen dort befestigbar ist, und
die Schraubverbindungen in montiertem Zustand von dem Innenkörper (3) verdeckt sind.

6. Luftausströmer (1) nach einem der vorstehenden Ansprüche,
**dadurch gekennzeichnet, dass** der Innenkörper (3) in Richtung einer Achse X in den Außenkörper (5) einführbar ist, wobei zwischen dem Innenkörper (3) und dem Außenkörper (5) ein elastisch verformbares erstes Klemmelement (35) angeordnet ist, welches dazu eingerichtet ist, in montiertem Zustand eine erste Widerstandskraft gegen ein Bewegen des Innenkörpers (3) relativ zu dem Außenkörper (5) in Richtung der Achse X aufzubringen.

7. Luftausströmer (1) nach Anspruch 6,
**dadurch gekennzeichnet, dass** der Innenkörper (3) relativ zu dem Außenkörper (5) um die Achse X drehbar gelagert ist und das zwischen dem Innenkörper (3) und dem Außenkörper (5) angeordnete erste Klemmelement (35) dazu eingerichtet ist, in montiertem Zustand eine zweite Widerstandskraft gegen eine Drehung des Innenkörpers (3) relativ zu dem Außen-körper um die Achse X auszuüben.

8. Luftausströmer (1) nach einem der vorstehenden Ansprüche,
**dadurch gekennzeichnet, dass** ein oder mehrere elastisch verformbare zweite Klemmelemente (39) an einer äußeren Umfangsfläche (27) des Außenkörpers (5) angebracht sind, welche dazu eingerichtet sind, in montiertem Zustand den Außenkörper (5) mittels einer kraft-schlüssigen Verbindung innerhalb der Ausnehmung (13) zu befestigen.

9. Luftausströmer (1) nach einem der Ansprüche 6 bis 8,
**dadurch gekennzeichnet, dass** das erste Klemmelement (35) als O-Ring (51) ausgebildet ist und/oder das eine bzw. die mehreren zweiten Klemmelemente (39) als Stahlfeder ausgebildet ist bzw. sind.

10. Luftausströmer (1) nach einem der Ansprüche 6 bis 8,
**dadurch gekennzeichnet, dass** das erste Klemmelement (35) und das mindestens eine zweite Klemmelement (39) einstückig als Stahlfeder ausgebildet sind, und sich die Stahlfeder in montiertem Zustand von der äußeren Umfangsfläche (27) zu einer inneren Umfangsfläche (29) des Außenkörpers (5) hin erstreckt.

11. Luftausströmer (1) nach einem der vorstehenden Ansprüche,
mit mehreren, in Strömungsrichtung im Wesentlichen nebeneinander angeordneten Klappen (7), die jeweils zum Freigeben und Verschließen eines Teils der Öffnung zum Ausströmen von Luft aus der Leitung des Lüftungssystems eingerichtet sind,
**dadurch gekennzeichnet, dass** die Klappen (7) mittels eines Koppelglieds (23) miteinander verbunden und parallel zueinander vorzugsweise stufenlos zwischen einer Verschlussposition und einer Freigabeposition hin und her schwenkbar in dem Innenkörper (3) gelagert sind, wobei das Koppelglied (23) aus dem Material M besteht.

12. Luftausströmer (1) nach einem der vorstehenden Ansprüche,
**dadurch gekennzeichnet, dass** die mindestens eine Klappe (7) mittels Achszapfen (53) drehbar in dem Innenkörper (3) gelagert ist, indem die Achszapfen (53) zwischen einem in dem Innenkörper (3) ausgebildeten Vorsprung (25) einerseits und einem als Flachkörper ausgebildeten Gegenlager andererseits gelagert sind.
